Europäisches Patentamt

European Patent Office

Office européen des brevets

(11) Veröffentlichungsnummer: **0 509 392 A1**

# (12) EUROPÄISCHE PATENTANMELDUNG

(21) Anmeldenummer: **92106146.1**

(22) Anmeldetag: **09.04.92**

(51) Int. Cl.⁵: **C09D 5/03**, C08G 59/32, B05D 7/26, C09D 133/06

(30) Priorität: **18.04.91 DE 4112688**

(43) Veröffentlichungstag der Anmeldung:
**21.10.92 Patentblatt 92/43**

(84) Benannte Vertragsstaaten:
**AT BE CH DE ES FR GB IT LI NL SE**

(71) Anmelder: **HOECHST AKTIENGESELLSCHAFT**
**Postfach 80 03 20**
**W-6230 Frankfurt am Main 80(DE)**

(72) Erfinder: **Fink, Dietmar, Dl.**
**Schwarzwaldstrasse 44**
**W-6204 Taunusstein(DE)**
Erfinder: **Godau, Claus, Dl.**
**Halbritterstrasse 9**
**W-6229 Kiedrich(DE)**
Erfinder: **Just, Christoph, Dr.**
**Akazienstrasse 6**
**W-6272 Niedernhausen(DE)**
Erfinder: **Plum, Helmut, Dr.**
**Nibelungenstrasse 3**
**W-6204 Taunusstein(DE)**

(54) **Pulverförmige Überzugsmittel.**

(57) Pulverförmiges Überzugsmittel bestehend aus
(A) einem Copolymeren, das Glycidylgruppen enthält,
(B) einer aliphatischen oder cycloaliphatischen zweibasischen Säure, deren Anhydrid, oder einem Polyolmodifizierten Anhydrid einer zweibasischen Säure,
(C) gegebenenfalls Pigmenten und anderen Additiven.
Das Copolymer (A) hat ein Molekulargewicht (Mn) von 1.000 - 10.000 und eine Glasübergangstemperatur von 30 - 90 °C und ist ein Mischpolymerisat aus
a) mindestens 10 Gew.-% Glycidylacrylat oder Glycidylmethacrylat,
b) 5 - 50 Gew.-% tert.-Butylacrylat oder tert.-Butylmethacrylat
c) 20 - 60 Gew.-% eines oder mehrerer Alkylester von aliphatischen ungesättigten Mono- oder Dicarbonsäuren, sowie
d) 0 - 50 Gew.-% eines oder mehreren anderen olefinisch ungesättigten Monomeren.

EP 0 509 392 A1

Die Erfindung betrifft pulverförmige Überzugsmittel oder auch Pulverlacke genannt, die Mischungen aus epoxidgruppenhaltigen Acrylatharzen und verschiedenen Härtungsmitteln darstellen.

Pulverlacke, die als wesentliches Bindemittel ein epoxidgruppenhaltiges Acrylat-Copolymerisat enthalten, sind gut bekannt. Sie sind z.B. in folgenden Patenten beschrieben: US 3 730 930, US 3 752 870, US 3 781 379, US 3 787 521, US 4 091 049, US 4 091 048, US 3 939 127, US 3 932 367, US 3 991 132, US 3 991 133, US 4 092 373, US 4 044 070, US 4 374 954, US 4 346 144, DE 23 53 040, DE 24 23 886, DE 24 41 753 und DE 25 09 410. Als Härter werden dabei zweibasische Säuren, deren Anhydride oder Substanzen, die eine zweibasische Säure unter Härtungsbedingungen bilden, eingesetzt. Nach der EP 299 420 kann der Härter auch ein Reaktionsprodukt aus einem Polyanhydrid und einem Polyol sein.

Die in den zuvor genannten Patenten beschriebenen Copolymerisate enthalten nur bis zu 30 Gew.-% an Glycidylacrylat bzw. Glycidylmethacrylat, der Rest des Copolymeren besteht aus anderen ungesättigten Monomeren. Als solche ungesättigten Verbindungen kommen eine große Anzahl derartiger Verbindungen in Frage, unter anderem auch Styrol und Acrylate, ohne daß jedoch ausdrücklich auf die besondere Eignung von Acrylaten mit tert.-Butylgruppen hingewiesen wird. Gemäß den Beispielen des Standes der Technik sind bei der Aushärtung der dort beschriebenen Pulverlacke in den meisten Fällen relativ hohe Temperaturen (über 140 °C) notwendig. Für viele Anwendungszwecke, beispielsweise bei der Lackierung von Holz, Kunststoffen oder bei der Automobillackierung als Decklack über einem temperaturempfindlichen Basislack, ist es jedoch vorteilhaft, daß die pulverförmigen Überzugmittel bei möglichst niedrigen Temperaturen, etwa schon ab 120 °C, aushärten.

Die Aufgabe der vorliegenden Erfindung bestand darin, Pulverlacksysteme bereitzustellen, die auch ohne Katalysatoren oder mit möglichst geringen Mengen davon bei Temperaturen ab 120 °C zu Lacken mit guten Eigenschaften aushärten. Diese Aufgabe kann überraschend dadurch gelöst werden, daß das epoxidgruppenhaltige Acrylat-Copolymer tert.-Butyl-(meth)-acrylat als Comonomer aufweist. Warum die Reaktivität der Acrylat-Copolymeren vom Gehalt an tert.-Butyl-(meth)-acrylat abhängt, ist unklar. obwohl, wie vorhergehend erläutert, epoxidgruppenhaltige Acrylat-Pulverlacke sehr zahlreich beschrieben sind, ist dieser überraschende Effekt nirgendwo erwähnt.

Gegenstand der Erfindung sind pulverförmige Überzugsmittel bestehend aus

(A) einem Copolymeren, das Glycidylgruppen enthält,

(B) einer aliphatischen oder cycloaliphatischen zweibasischen Säure, deren Anhydrid, oder einem Polyolmodifizierten Anhydrid einer zweibasischen Säure,

(c) gegebenenfalls Pigmenten und anderen Additiven,

wobei das Copolymer (A) ein Molekulargewicht (Mn) von 1.000 - 10.000 und eine Glasübergangstemperatur von 30 - 90 °C besitzt und ein Mischpolymerisat ist aus

a) mindestens 10 Gew.-% Glycidylacrylat oder Glycidylmethacrylat,

b) 5 - 50 Gew.-% tert.-Butylacrylat oder tert.-Butylmethacrylat

c) 20 - 60 Gew.-% eines oder mehrerer Alkylester von aliphatischen ungesättigten Mono- oder Dicarbonsäuren, sowie

d) 0 - 50 Gew.-% eines oder mehreren anderen olefinisch ungesättigten Monomeren.

Bevorzugt sind Copolymere A mit folgender Zusammensetzung:

14 - 43 Gew.-%     Glycidylmethacrylat,

15 - 35 Gew.-%     tert. Butylacrylat oder tert.-Butylmethacrylat,

12 - 51 Gew.-%     Acryl- oder Methacrylsäurealkylester,

0 - 40 Gew.-%      andere olefinisch ungesättigte Verbindungen,

und Copolymere folgender Zusammensetzung:

14 - 43 Gew.-%     Glycidylmethacrylat,

20 - 40 Gew.-%     Styrol,

10 - 30 Gew.-%     eines Dialkylesters einer olefinisch ungesättigten Dicarbonsäure,

0 - 36 Gew.-%      Acryl- oder Methacrylsäurealkylester,

5 - 20 Gew.-%      tert. Butylacrylat oder tert.-Butylmethacrylat.

Als Alkylester von ungesättigten Carbonsäuren kommen Acryl- oder Methacrylsäureester in Frage, die sich von einwertigen Alkoholen ableiten, vorzugsweise solchen mit 1 - 18 besonders bevorzugt mit 1 - 12 C-Atomen, wie Methyl-, Ethyl, n-Propyl; Isopropyl-, n-Butyl, Isobutyl-, sec. Butyl-, n-Pentyl, n-Hexyl-, 2-Ethylhexyl-, n-Octyl-, n-Nonyl-, Isononyl-, n-Decyl-, n-Dodecyl-, n-Tridecyl-, Isotridecyl-, Myristyl-, Cetyl-, Stearyl-, Eicosyl-, Isobornylacrylat bzw. -methacrylat. Es ist ebenfalls möglich, geringe Mengen, d.h. bis zu 5 Gew.-% eines Diacrylates oder Dimethacrylates eines zwei- oder dreiwertigen Alkohols einzusetzen, wie z.B. Hexandioldiacrylat oder Butandioldiacrylat oder -dimethacrylat oder Trimethylolpropantriacrylat oder trimethacrylat. Andere Monomere, die ggf. in Mischung mit den Acryl- oder Methacrylsäureestern eingesetzt werden können, sind die Ester aus $\alpha$, ß-ungesättigten Dicarbonsäuren wie z.B. Malein- oder Fumarsäuren und gesättigten einwertigen Alkoholen, z.B. Dimethylmaleinat, Diethylfumarat, Dibutylmaleinat, Dibutylfumarat usw.. Als weitere Comonomere kommen Acryl- oder Methacrylamid, Styrol, Vinyltoluol, $\alpha$-Methylstyrol, tert.-Butylstyrol, Vinylchlorid, Acrylnitril, Methacrylnitril oder Vinylacetat in Frage (Komponente d).

Die Acrylatharze können durch die bekannten Polymerisationsverfahren wie Lösungs-, Emulsions-, Perl- oder Substanzpolymerisation hergestellt werden. Besonders bevorzugt sind Acrylatharze, die durch Lösungspolymerisation oder nach einem Substanzpolymerisationsverfahren hergestellt sind wie z.B. in der EP 56 971 beschrieben.

Die Acrylatharze besitzen eine Glasübergangstemperatur von 30 - 90 °C. Die bevorzugte Glasübergangstemperatur liegt im Bereich von 30 - 60 °C. Die Molekulargewichte (Zahlenmittel bezogen auf Polystyrol-Standard) betragen im allgemeinen 1.000 - 10.000 vorzugsweise 1.000 - 5.000.

Die in der Erfindung als Härtungsmittel - Komponente (B) - verwendeten aliphatischen zweibasischen Säuren sind z.B. Adipinsäure, Pimelinsäure, Suberinsäure, Azelainsäure, Sebacinsäure, Malonsäure, Bernsteinsäure, Glutarsäure, 1,12-Dodecandisäure, usw.. Die Anhydride dieser Säuren können ebenfalls verwendet werden, z.B. Glutarsäureanhydrid, Bernsteinsäureanhydrid, sowie die Polyanhydride dieser Dicarbonsäuren. Diese Polyanhydride werden durch intermolekulare Kondensation der genannten aliphatischen zweibasischen Dicarbonsäure erhalten. Beispiele sind Adipinsäure(poly)anhydrid, Azelainsäure(poly)-anhydrid, Sebacinsäure(poly)anhydrid, Dodecandisäure(poly)anhydrid usw.. Die Polyanhydride haben ein Molekulargewicht (Gewichtsmittel bezogen auf Polystyrol-Standard) von 1.000 - 5.000. Die Polyanhydride können auch, wie in der EP 299 420 beschrieben, mit Polyol modifiziert werden. Die Polyanhydride sind bei Raumtemperatur fest. Die Herstellung der Polyanhydride erfolgt durch Reaktion der Dicarbonsäuren mit Essigsäureanhydrid bei Temperaturen von 120 - 200 °C vorzugsweise 120 - 170 °C. Dabei wird Essigsäure abgespalten. Die Entfernung der Essigsäure kann durch Destillation unter Vakuum beschleunigt werden.

Die Polyanhydride können auch im Gemisch mit den aliphatischen zweibasischen Dicarbonsäuren als Härtungsmittel eingesetzt werden oder im Gemisch mit Hydroxycarbonsäuren, die Schmelzpunkte zwischen 40 °C und 150 °C besitzen, z.B. 12-Hydroxy-Stearinsäure, 2- bzw. 3- bzw. 10-Hydroxyoctadecansäure, 2-Hydroxymyristinsäure, usw..

Die Menge der als Härtungsmittel - Komponente B - eingesetzten Anhydride und Säuren, bezogen auf das Acrylatharz, kann über einen weiten Bereich variieren und richtet sich nach der Anzahl der Epoxydgruppen im Acrylatharz. Im allgemeinen wird ein Molverhältnis von Carboxylgruppen bzw. Anhydridgruppen zu Epoxydgruppen von 0,4 - 1,4:1 bevorzugt von 0,8 - 1,2:1 gewählt.

Der Pulverlack kann die üblichen Pigmente und Füllstoffe enthalten. Er kann darüber hinaus auch einen Katalysator enthalten, um die Vernetzungsgeschwindigkeit zu erhöhen und die Härtungstemperatur zu erniedrigen. Geeignete Katalysatoren sind Tetraalkylammonium- oder Phosphoniumsalze, Imidazole, tert.-Amine, Metallsalze von organischen Carbonsäuren oder Phosphine. In den meisten Fällen ist die Anwesenheit eines Katalysators jedoch nicht erforderlich.

Der Pulverlack kann außerdem verschiedene Additive enthalten wie sie üblicherweise in Pulverlacken eingesetzt werden, insbesondere Entgasungsmittel wie z.B. Benzoin, das im allgemeinen in Mengen von 0,1 - 3 Gew.-% eingesetzt wird. Weiterhin können Verlaufsmittel verwendet werden z.B. oligomere Poly(meth)-acrylate wie z.B. Polylauryl(meth)acrylat, Polybutyl(meth)acrylat, Poly-2-ethylhexyl(meth)acrylat oder fluorierte Polymere oder Polysiloxane. Zur Verbesserung der Wetterbeständigkeit können die bekannten UV-Absorber und Antioxidantien zugegeben werden.

Die Komponenten A, B und C des Pulverlacks werden zunächst trocken gemischt und anschließend mit einem Doppelschneckenextruder bei einer Temperatur von 80 - 130 °C vorzugsweise 80 - 100 °C extrudiert. Das Extrudat wird nach Abkühlung und Zerkleinerung in einer Mühle gemahlen, wobei eine mittlere Teilchengröße von 20 - 90 nm vorzugsweise 40 - 70 nm angestrebt wird. Ein eventuell vorhandener Grobkornanteil kann abgesiebt werden.

Der Pulverlack wird nach einer der üblichen Methoden, beispielsweise durch elektrostatisches oder Tribospritzen appliziert. Nach der Applikation wird bei einer Temperatur von 120 - 200 °C ausgehärtet, vorzugsweise liegt die Härtungstemperatur bei 130 - 160 °C.

Der Pulverlack eignet sich besonders als Klarlack auf wäßrigen Basislacken. Man erhält 2-Schicht-Lackierungen mit außergewöhnlicher Oberflächenglätte, Glanz, Chemikalien- und Wetterbeständigkeit.

**Beispiele**

**1. Herstellung der epoxydgruppen-haltigen Acrylatharze**

**1.1 Harze 1a - 1e**

Solvesso 100 wurde unter Stickstoff auf 150 °C vorgelegt. Dann wurde die Monomerenmischung zusammen mit dem Initiator bei 150 °C innerhalb von 7 Std. gleichmäßig zudosiert. Nach Dosierende hielt man weitere 2 Std. bei 150 °C und destillierte dann das Solvesso ab, zuerst bei 150 °C und Normaldruck, zuletzt bei 170 °C und 18 mbar. Man erhielt ein festes, farbloses Harz. Die Zusammensetzungen und Kenndaten sind in Tabelle 1 zusammengestellt (Gewichtsteile = GT):

| Tabelle 1 | 1a | 1b | 1c | 1d | 1e |
|---|---|---|---|---|---|
| Solvesso 100 | 15,00 GT | 15,00 GT | 15,00 GT | 15,00 GT | 15,00 GT |
| Glycidylmethacrylat | 31,64 " | 31,64 " | 31,64 " | 31,64 " | 31,64 " |
| t-Butylacrylat | 15,56 " | – | 15,56 " | – | 7,78 " |
| Methylmethacrylat | 12,80 " | 12,80 " | 32,80 " | 32,80 " | 32,80 " |
| Styrol | 40,00 " | 40,00 " | 20,00 " | 20,00 " | 20,00 " |
| n-Butylmethacrylat | – | 15,56 " | – | 15,56 " | 7,78 " |
| Di-tert.-butylperoxid | 1,50 " | 1,50 " | 1,50 " | 1,50 " | 1, 50 " |
| Viskosität (Ubbelohde, 50%-ig in Butyl acetat, 20 °C) | 390 | 290 | 190 | 300 | 230 mPa.s |
| Glastemperatur | 54 | 47 | 45 | 41 | 42 °C |
| Mw | 20.400 | 13.000 | 14.500 | 9.300 | 9.800 |
| Epoxidäquivalentgewicht | 500 | 495 | 500 | 480 | 480 g/mol |

**1.2 Harze 2a,2b**

Maleinsäuredi-isopropylester wurde vorgelegt und auf 175 °C erwärmt. Dann wurde die Monomerenmischung zusammen mit dem Initiator bei 175 °C innerhalb von 7 Std. gleichmäßig zudosiert. Anschließend hielt man noch 1 Std. bei dieser Temperatur und destillierte dann im Vakuum (18 mbar) flüchtige Bestandteile (Initiatorspaltprodukte) ab. Man erhielt ein festes, farbloses Harz. Die Zusammensetzungen und Kenndaten sind in Tabelle 2 zusammengestellt:

Tabelle 2

|  | 2a | 2b |
|---|---|---|
| Di-isopropylmaleinat | 22,00 g | 22,00 g |
| Glycidylmethacrylat | 28,50 g | 28,50 g |
| Methylmethacrylat | 5,00 g | - |
| t-Butylacrylat | - | 5,00 g |
| Styrol | 44,00 g | 44,00 g |
| Di-tert.butylperoxid | 0,50 g | 0,50 g |
| Visk. (Platte, Kegel, D = 100 s, 170 °C) | 2.100 | 3.900 mPa.s |
| Glastemperatur | 45 | 43 °C |
| Mw | 6.600 | 19.000 |
| Epoxyäquivalentgewicht | 535 | 535 |

## 2. Herstellung von Dodecandisäurepolyanhydrid

69,27 GT Dodecandisäure und 30,73 GT Essigsäureanhydrid wurden auf 150 °C erhitzt. Dabei wurde Essigsäure abdestilliert stilliert. Sobald keine Essigsäure mehr destillierte, wurde die Temperatur auf 170 °C erhöht und zunächst unter Normaldruck, dann unter Vakuum weiter Essigsäure abdestilliert. Das Vakuum wurde so gesteuert, daß nur Essigsäure, aber kein Essigsäureanhydrid abdestillierte. Anschließend hielt man weitere 3 Std. bei 170 °C/20 mbar und kühlte dann ab. Der Rückstand besaß einen Schmelzpunkt von 84 °C.

## 3. Herstellung und Prüfung der Pulver-Klarlacke

773 g der Harze 2a, 2b, 224 g Dodecandisäurepolyanhydrid (bzw. 726 g der Harze 1a - 1e und 271 g Dodecandisäurepolyanhydrid) und 3 g Benzoin wurden zunächst trocken gemischt. Diese Mischung wurde dann auf einem Laborextruder bei Temperaturen von 80 - 120 °C in der Schmelze dispergiert. Das Extrudat wurde nach Abkühlung und Vorzerkleinerung auf einer Gebläsemühle auf eine durchschnittliche Korngröße von 50 µm zu einem Pulverlack gemahlen. Der Grobkornanteil von Teilchengrößen oberhalb 90 µm wurde abgesiebt. Der Pulverlack wurde mit einer elektrostatischen Pulversprühanlage bei 60 KV auf entfettete, geerdete Eisenbleche so aufgespritzt, daß nach dem Einbrennen bei 140 °C/30 min eine Schichtdicke von 60 µm resultierte. Die Prüfergebnisse sind in Tabelle 3 zusammengestellt:

Tabelle 3

|  | 1a | 1b | 1c | 1d | 1e | 2a | 2b |
|---|---|---|---|---|---|---|---|
| Gelzeit (140 °C) | 175 | 195 | 200 | 235 | 230 | 240 | 110 s |
| Fließstrecke bei 140 °c (DIN 16916[a]) | 65 | 80 | 117 | 123 | 136 | 130 | 78 mm |
| Glanz (60° DIN 67530) | 103 | 107 | 106 | 108 | 107 | 102 | 107 ° |
| Verlauf | sehr gut | sehr gut | sehr gut | sehr gut | sehr gut | sehr gut | sehr gut |
| Erichsentiefung (DIN 53156) | 10,4 | 10,8 | 11,9 | 12,3 | 11,9 | 10,0 | 9,3 mm |
| Gitterschnitt (DIN 52151) | 0 | 0 | 0 | 0 | 0 | 0 | 0 |
| Schlagprüfung (ASTM D 2794; rückseitig) | 160 | 80 | 160 | 20 | 80 | 20 | 160 i.p. |

a) Einwaage: 0,2 g; Untergrund: entfettetes Stahlblech; 1 min. waagrecht, dann 60 ° Neigung

Die t- Butylacrylat-haltigen Produkte zeigen eine höhere Reaktivität und eine deutlich bessere Schlagtiefung als die Harze ohne t-Butylacrylat.

**Patentansprüche**

1. Pulverförmiges Überzugsmittel bestehend aus
   (A) einem Copolymeren, das Glycidylgruppen enthält,
   (B) einer aliphatischen oder cycloaliphatischen zweibasischen Säure, deren Anhydrid, oder einem Polyolmodifizierten Anhydrid einer zweibasischen Säure,
   (C) gegebenenfalls Pigmenten und anderen Additiven,
   dadurch gekennzeichnet, daß das Copolymer (A) ein Molekulargewicht (Mn) von 1.000 - 10.000 und eine Glasübergangstemperatur von 30 - 90 °C besitzt und ein Mischpolymerisat ist aus
   a) mindestens 10 Gew.-% Glycidylacrylat oder Glycidylmethacrylat,
   b) 5 - 50 Gew.-% tert.-Butylacrylat oder tert.-Butylmethacrylat
   c) 20 - 60 Gew.-% eines oder mehrerer Alkylester von aliphatischen ungesättigten Mono- oder Dicarbonsäuren, sowie
   d) 0 - 50 Gew.-% eines oder mehreren anderen olefinisch ungesättigten Monomeren.

2. Pulverförmiges Überzugsmittel nach Anspruch 1, dadurch gekennzeichnet, daß das Copolymer (A) aus
   14 - 43 Gew.-%     Glycidylmethacrylat
   15 - 35 Gew.-%     tert. Butylacrylat oder tert.-Butylmethacrylat
   12 - 51 Gew.-%     Acryl- oder Methacrylsäurealkylester und
   0 - 40 Gew.-%      andere olefinisch ungesättigte Verbindungen
   besteht.

3. Pulverförmiges Überzugsmittel nach Anspruch 1, dadurch gekennzeichnet, daß das Copolymer (A) besteht aus
   14 - 43 Gew.-%     Glycidylmethacrylat,
   20 - 40 Gew.-%     Styrol,
   10 - 30 Gew.-%     eines Dialkylesters einer olefinisch ungesättigten Dicarbonsäure,
   0 - 36 Gew.-%      Acryl- oder Methacrylsäurealkylester und
   5 - 20 Gew.-%      tert. Butylacrylat oder tert.-Butylmethacrylat.

4. Pulverförmiges Überzugsmittel nach Anspruch 1, dadurch gekennzeichnet, daß das Copolymer (A) durch Lösungs- oder Substanzpolymerisation hergestellt wird.

5. Pulverförmiges Überzugsmittel nach Anspruch 1, dadurch gekennzeichnet, daß die Komponente (B) eine gesättigte aliphatische Dicarbonsäure mit 4 bis 12 C-Atomen ist.

6. Pulverförmiges Überzugsmittel nach Anspruch 1, dadurch gekennzeichnet, daß die Komponente (B) ein monomeres Anhydrid einer aliphatischen Dicarbonsäure ist.

7. Pulverförmiges Überzugsmittel nach Anspruch 1, dadurch gekennzeichnet, daß die Komponente (B) ein Polyanhydrid einer aliphatischen Dicarbonsäure ist.

8. Pulverförmiges Überzugsmittel nach Anspruch 1, dadurch gekennzeichnet, daß die Komponente (B) ein Umsetzungsprodukt aus dem Polyanhydrid einer aliphatischen Dicarbonsäure und einem Polyol ist.

9. Pulverförmiges Überzugsmittel nach Anspruch 1, dadurch gekennzeichnet, daß die Komponente (B) in einer Menge vorhanden ist, die 0,4 bis 1,4 Carboxyl und/oder Anhydridgruppen pro Epoxidgruppen am Copolymeren (A) entspricht.

10. Verwendung des Überzugsmittels nach Anspruch 1 zur Herstellung von Überzügen.

11. Verwendung des Überzugsmittels nach Anspruch 1 als Klarlack auf wäßrigen Basislacken.

| | Europäisches Patentamt | EUROPÄISCHER RECHERCHENBERICHT | Nummer der Anmeldung |
|---|---|---|---|

EP   92 10 6146

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-2 540 921 (HOECHST AG) <br> * Anspruch 1 * <br><br> --- | 1 | C09D5/03 <br> C08G59/32 <br> B05D7/26 |
| A | JP-A-52 098 040 (KANSAI PAINT KK) <br> * Seite 221, rechte Spalte, Zeile 5 - Zeile 20; Tabelle 1 * <br><br> ----- | 1 | C09D133/06 |

**RECHERCHIERTE SACHGEBIETE (Int. Cl.5)**

C09D
C08G
B05D

Der vorliegende Recherchenbericht wurde für alle Patentansprüche erstellt

| Recherchenort | Abschlußdatum der Recherche | Prüfer |
|---|---|---|
| DEN HAAG | 03 AUGUST 1992 | D. Schüler |